# EUROPEAN PATENT APPLICATION

(11) **EP 1 883 211 A2**
(43) Date of publication of application: **30.01.2008**
(21) Application number: 07113094.2
(22) Date of filing: 25.07.2007
(51) Int. Cl.: H04M 1/247, H04M 1/725, G06F 3/048

(54) **Mobile communication terminal and method for creating menu screen for the same**

(30) Priority: 25.07.2006 KR 20060069857
(71) Applicant: LG Electronics Inc., Seoul, 150-721 (KR)
(72) Inventor: Lee, Sang Daek, 153-801, Seoul (KR); Kim, Bo Kyung, 153-801, Seoul (KR); Kim, Yong Kil, 153-801, Seoul (KR); Shin, Sun E, 153-801, Seoul (KR); Kim, Dong Joo, 153-801, Seoul (KR); Han, Ji Seok, 153-801, Seoul (KR); Kim, Byoung Soo, 153-801, Seoul (KR)
(74) Representative: Cabinet Plasseraud

(57) **Abstract**

A mobile communication terminal including a display unit configured to display information, and a controller configured to allocate at least first and second specified display regions on the display unit and to display at least first and second menu items in a combined form with respective multimedia images on the at least first and second specified display regions, respectively.

## Description

This application claims priority to Korean Patent Application No. 10-2006-0069857 filed in Korea on July 25, 2006, the entire contents of which is hereby incorporated by reference in its entirety.

### BACKGROUND OF THE INVENTION

### Field of the Invention

The present invention relates to a mobile communication terminal, and more particularly, to a mobile communication terminal and corresponding method that displays menu items in a combined form with respective multimedia images on specified display regions of the mobile terminal.

### Discussion of the Related Art

Mobile terminals now provide many additional functions besides the basic call service function. For example, users can access the Internet, watch videos, send and receive voice and text messages, perform scheduling tasks, play games, etc. using their mobile terminal.

Therefore, because there are numerous functions the user can perform, the mobile terminals include a plurality of menu options the users uses to perform a desired task. For example, when the user wants to watch a video on their mobile terminal, the user first selects a main menu option, and then selects an item such as "1. Multimedia" from a plurality of items. The user then selects a corresponding video from a list of provided videos. However, because there are so many options available on a mobile terminal, it is sometimes difficult to comprehend the meaning of a particular menu item.

### SUMMARY OF THE INVENTION

Accordingly, one object of the present invention is to address the above-noted and other problems.

Another object of the present invention is to provide a mobile communication terminal and corresponding method that divides a display region into a plurality of specified regions and displays a plurality of menu items and combined multimedia images on the specified regions such that the user can easily recognize what function is performed by an associated menu item.

Another object of the present invention is to provide a mobile communication and corresponding method in which a selected menu item among a plurality of multimedia menu items is displayed more prominently.

Yet another object of the present invention is to allow a user to selectively select an image such as a still image or moving image that is combined with a character menu item such that the user can selectively associate an image with a particular menu item and thereby easily remember what the menu item corresponds to.

To achieve these objects and other advantages and in accordance with the purpose of the invention, as embodied and broadly described herein, the present invention provides in one aspect a mobile communication terminal including a display configured to display information, and a controller configured to allocate at least first and second specified display regions on the display unit and to display at least first and second menu items in a combined form with respective multimedia images on the at least first and second specified display regions, respectively.

In another aspect, the present invention provides a mobile communication method including allocating at least first and second specified display regions on a display unit, and displaying at least first and second menu items in a combined form with respective multimedia images on the at least first and second specified display regions, respectively.

Further scope of applicability of the present invention will become apparent from the detailed description given hereinafter. However, it should be understood that the detailed description and specific examples, while indicating preferred embodiments of the invention, are given by illustration only, since various changes and modifications within the spirit and scope of the invention will become apparent to those skilled in the art from this detailed description.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a block diagram illustrating a mobile communication terminal according to an embodiment of the present invention;

FIG. 2 is a flowchart illustrating a method for creating a menu screen according to an embodiment of the present invention;

FIG. 3 is an overview illustrating a menu screen divided into equal-sized display regions according to an embodiment of the present invention;

FIGs. 4(a) and 4(b) are overviews illustrating menu screens divided into unequal-sized display regions according to an embodiment of the present invention;

FIGs. 5(a) and 5(b) are overviews illustrating menu screens on which an activated menu item is displayed more prominently than non-activated menu items according to an embodiment of the present invention; and

FIGs. 6(a) and 6(b) are overviews illustrating a multimedia menu item being selected according to an embodiment of the present invention.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

A mobile communication terminal according to the present invention, which will be described below, may be any electronic device that supports a multimedia function. For example, the present invention can be applied to various types of terminals such as Personal Digital Assistants (PDAs), Portable Multimedia Players (PMPs), digital cameras, camcorders, cell phones, game consoles, etc.

For simplicity of explanation, the present invention will be described under the assumption that it is applied to a mobile communication terminal such as a mobile cellular phone. Further, the present invention may also be applied to various types of mobile terminals such as folder, slide, bar, and swing types, but is also applicable to other types of mobile terminals.

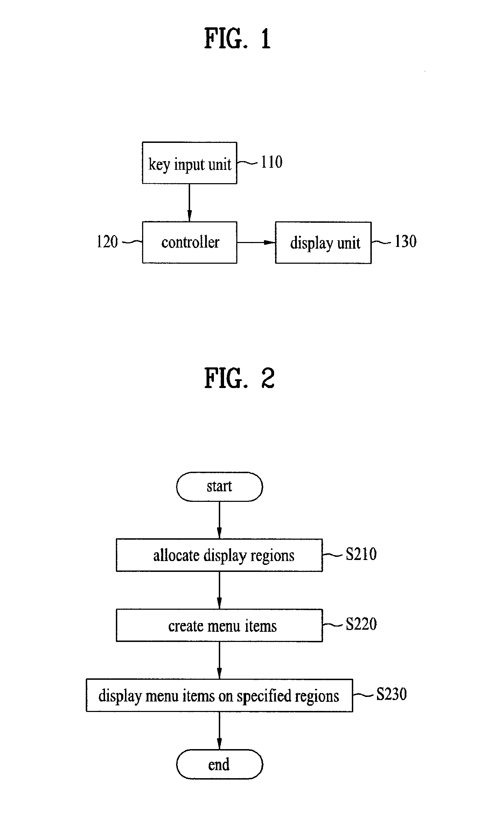

FIG. 1 is a block diagram illustrating a mobile communication terminal according to an embodiment of the present invention. As shown in FIG. 1, the mobile communication terminal includes a key input unit 110, a controller 120, and a display unit 130. The mobile terminal also includes other components that are not shown in FIG. 1 such as a wireless communication unit, an antenna, a speaker, a microphone, etc.

FIG. 2 is a flowchart illustrating a method for creating a menu screen according to an embodiment of the present invention. FIG. 1 will also be referred to in this description. As shown, when the user inputs an input signal requesting a multimedia menu screen through the key input unit 110, the controller 120 allocates at least two specified display regions on the display unit 130 (S210). Further, as will be described in more detail later, the controller 120 may divide the display regions into equal or unequal sized portions.

Then, the controller 120 combines at least two menu items with respective multimedia images for display on the respective display regions (S220). Further, each of the menu items includes an icon and text and the multimedia image combined with the menu item includes at least one of a still picture and a moving picture.

In more detail, the user can choose an item from a menu list that he or she wants to combine with a particular image such that the user can then see the menu item with an associated image and thereby easily recognize the contents of the menu item. The controller 120 then combines the user selected image with the menu item (S220) and displays the combined menu item and image in a corresponding display region (S230).

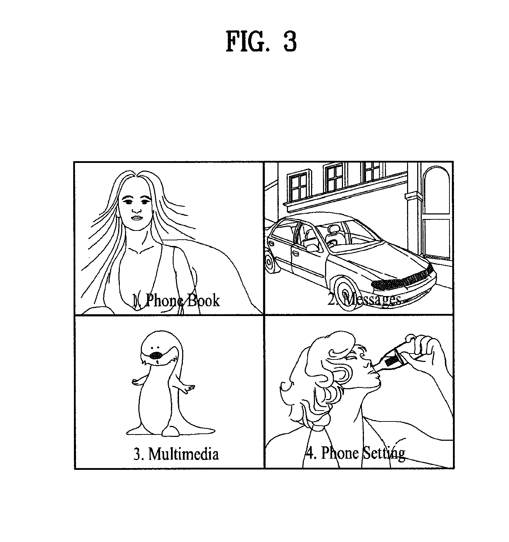

Note that FIGs. 3-6 illustrate different embodiments of menu items including combined images, respectively. For example, as shown in FIG. 3, the user has selected a woman as being displayed in a combined manner with the menu item "Phone book." That is, the user may want to associate a girl's picture with the "Phone Book" item such that he or she can easily remember the "Phone Book" item displays a list of phone numbers. Another user may want to associate a completely different image with the "Phone Book" menu item. Thus, in accordance with an embodiment of the present invention, the user can selectively decide and associate a particular image (still or movie) with a particular menu item such that the user can easily remember what the selected menu item performs or contains.

The user can also then select one of the display regions using a cursor. Further, the multimedia image displayed on the selected display region is activated and displayed more prominently (i.e., highlighted), compared to multimedia images displayed on unselected display regions.

In addition, if the activated multimedia image is a moving picture (i.e., a movie), the moving picture is displayed more prominently by reproducing or playing the moving picture or by displaying an enlarged version of the display region. If the activated multimedia image is a still picture, the still image is displayed more prominently by displaying the outline of the activated multimedia image, by displaying the corresponding display region in bold, or by displaying (or processing) the activated multimedia image in color while displaying (or processing) the other multimedia images in black and white.

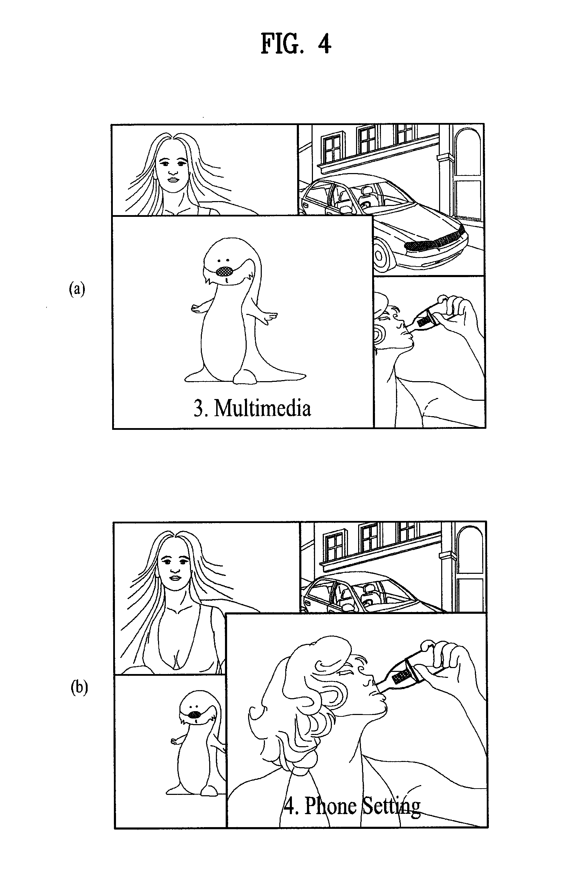

Further, as discussed above, the controller 120 can divide the display regions into equal or unequal portions. In more detail, FIG. 3 is an overview illustrating a menu screen divided into equal display regions according to an embodiment of the present invention, and FIGs. 4(a) and 4(b) are overviews illustrating menu screens divided into unequal display regions according to an embodiment of the present invention.

As shown in FIG. 3, display regions of the same size are allocated and respective multimedia menu items are displayed on the allocated display regions. In FIGs. 4(a) and 4(b), display regions of different sizes are allocated and respective multimedia menu items are displayed on the allocated display regions. The user may also draw a desired display region on the touch screen using a pointer such as his or her finger. The controller 120 then sets the display regions based on the size drawn by the user.

Further, in FIG. 3, a selected menu item may be displayed more prominently (i.e., highlighted) by displaying an image of the selected menu item in color while displaying images of unselected menu items in black and white. The controller 120 may also inform the user that a menu item is active or selected by blinking an outline of the image or by displaying the outline in bold. In FIGs. 4(a) and 4(b), the controller 120 informs the user that the menu item is active or selected by displaying the selected menu item in a larger size than the unselected menu items. Thus, the user can advantageously see when a particular menu item has been selected.

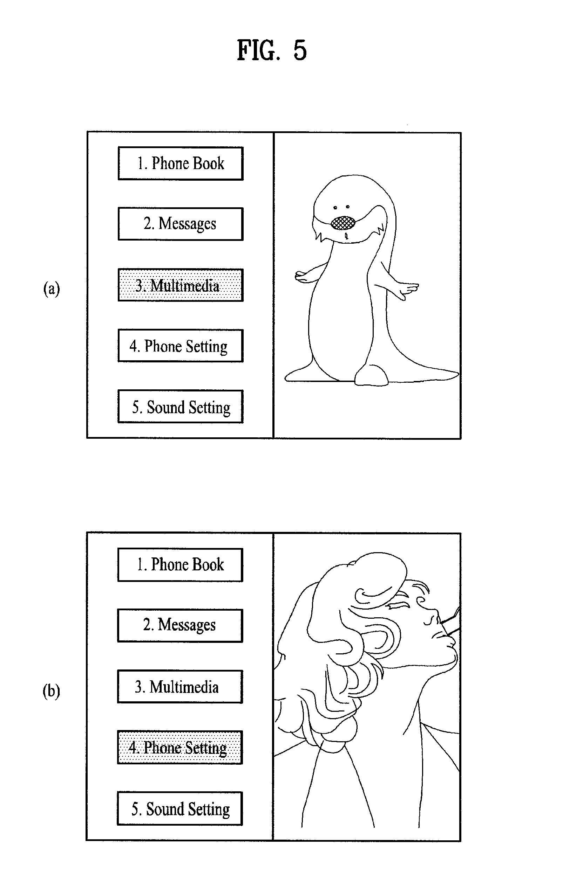

Next, FIGs. 5(a) and 5(b) are overviews illustrating menu screens on which an activated menu item is displayed more prominently according to another embodiment of the present invention. As shown in FIGs. 5(a) and 5(b), the user can select a menu item using a cursor or by touching the menu item when the display is a touch screen. Further, in this embodiment, the multimedia image combined with the menu item is displayed only when the selection of the menu item.

That is, in Fig. 5(a), the image combined with the menu item "3. Multimedia" is displayed when the menu item is selected. Similarly, the image combined with the "1. Phone Book" menu item is displayed when the "Phone Book" menu item is selected. A similar concept applies to FIG. 5(b). Further, each menu item includes an icon and text. Also, as discussed above, a multimedia image combined with the menu item can be a still picture or a moving picture.

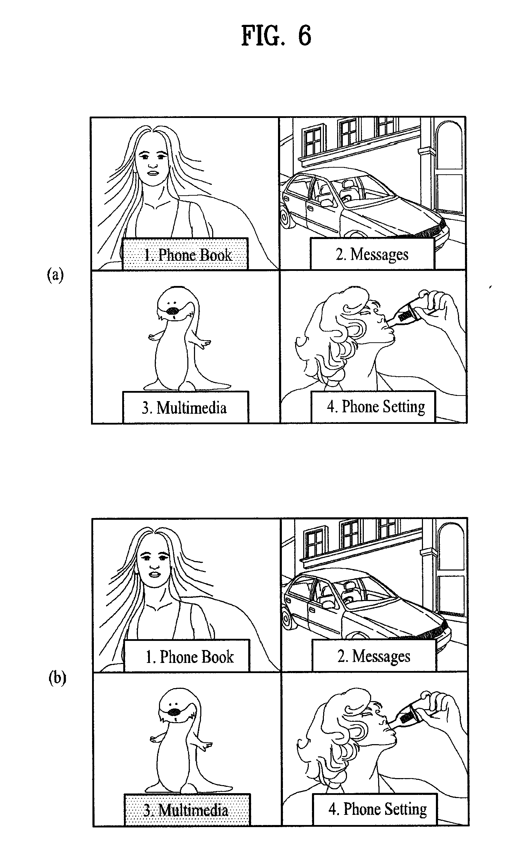

Next, FIGs. 6(a) and 6(b) illustrate a method for selecting a multimedia menu item according to another embodiment of the present invention. In more detail, the method of FIGs. 6(a) and 6(b) uses a combination of the embodiments described above to emphasize both a multimedia image and a menu icon displayed on a selected display region. For example, in FIG. 6(a), when the user selects the "Phone Book" menu item, the image combined with the menu item is highlighted as well as the menu item. In addition, the user can select the menu item by selecting either the menu item itself or by selecting the image associated with the menu item.

The user can also use a cursor key on the input unit 110 to navigate between the different menu items and then press an enter key to select or activate a particular menu item. Because each different display region is highlighted as the user navigates through the menu items, the user can determine what menu item will be activated when the enter key is selected

As is apparent from the above description, the mobile communication terminal and corresponding method for according to the present invention provides several advantages. For example, at least two specified display regions are allocated and at least two menu items in a combined form with respective multimedia images are constructed and displayed on the at least two specified display regions, respectively. In addition, each menu item is provided with an image that represents multimedia data to be reproduced or represents characteristics and content of the multimedia data. This allows users to identify overall characteristics and content of the multimedia data with reference only to the corresponding menu item.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A mobile communication terminal, comprising:
a display unit configured to display information; and
a controller configured to allocate at least first and second specified display regions on the display unit and to display at least first and second menu items in a combined form with respective multimedia images on the at least first and second specified display regions, respectively.

2. The mobile communication terminal of claim 1, wherein each menu item includes at least one of an icon and text indicating a type of the menu item.

3. The mobile communication terminal of claim 1, wherein the multimedia images combined with the menu items include at least one of a still picture and a moving picture.

4. The mobile communication terminal of claim 1, further comprising:
an input unit configured to select one of the specified display regions.

5. The mobile communication terminal of claim 4, wherein the controller displays a selected display region more prominently than other non-selected display regions.

6. The mobile communication terminal of claim 5, wherein the controller displays the selected display region more prominently than other non-selected display regions by displaying the selected display region in color and the other non-selected display regions in black and white or by displaying an outline of the selected display region in bold.

7. The mobile communication terminal of claim 5, wherein the controller displays the selected display region more prominently than other non-selected display regions by displaying the multimedia image in the selected display region to be larger than other multimedia images in the other non-selected display regions.

8. The mobile communication terminal of claim 5, wherein the controller displays the menu items in the first display region and displays only a multimedia image corresponding to a selected menu item in the second display region.

9. The mobile communication terminal of claim 1, wherein the controller allocates the at least first and second specified display regions to have equal or unequal sizes.

10. The mobile communication terminal of claim 4, wherein the input unit is configured to allow a user to selectively select a multimedia image and corresponding menu item to be combined with the multimedia image.

11. A mobile communication method, comprising:
allocating at least first and second specified display regions on a display unit; and
displaying at least first and second menu items in a combined form with respective multimedia images on the at least first and second specified display regions, respectively.

12. The mobile communication method of claim 11, wherein each menu item includes at least one of an icon and text indicating a type of the menu item.

13. The mobile communication method of claim 11, wherein the multimedia images combined with the menu items include at least one of a still picture and a moving picture.

14. The mobile communication method of claim 11, further comprising:
selecting one of the specified display regions.

15. The mobile communication method of claim 14, wherein the displaying step displays a selected display region more prominently than other non-selected display regions.

16. The mobile communication method of claim 15, wherein the displaying step displays the selected display region more prominently than other non-selected display regions by displaying the selected display region in color and the other non-selected display regions in black and white or by displaying an outline of the selected display region in bold.

17. The mobile communication method of claim 15, wherein the displaying step displays the selected display region more prominently than other non-selected display regions by displaying the multimedia image in the selected display region to be larger than other multimedia images in the other non-selected display regions.

18. The mobile communication method of claim 15, wherein the displaying step displays the menu items in the first display region and displays only a multimedia image corresponding to a selected menu item in the second display region.

19. The mobile communication method of claim 11, wherein the allocating step allocates the at least first and second specified display regions to have equal or unequal sizes.

20. The mobile communication method of claim 14, wherein the selecting step selectively selects a multimedia image and corresponding menu item to be combined with the multimedia image.
